# EUROPÄISCHE PATENTSCHRIFT

(11) **EP 3 507 034 B1**
(45) Veröffentlichungstag und Bekanntmachung des Hinweises auf die Patenterteilung: **23.09.2020**
(21) Anmeldenummer: 17780980.3
(22) Anmeldetag: 30.08.2017
(51) Int. Cl.: B21D 5/00, B21D 5/02, G06T 1/00, G06T 7/00

(54) **BIEGEMASCHINE MIT EINER BIEGEINFORMATIONS-ANZEIGEVORRICHTUNG**
BENDING MACHINE HAVING A BENDING INFORMATION DISPLAY DEVICE
MACHINE À CINTRER MUNIE D'UN DISPOSITIF D'AFFICHAGE DE DONNÉES DE CINTRAGE

(30) Priorität: 02.09.2016 AT 507822016
(43) Veröffentlichungstag der Anmeldung: 10.07.2019
(73) Patentinhaber: TRUMPF Maschinen Austria GmbH & Co. KG., 4061 Pasching (AT)
(72) Erfinder: ANGERER, Gerhard, 4203 Altenberg (AT); DENKMEIER, Thomas, 4050 Traun (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); THEIS, Helmut, 4540 Pfarrkirchen (AT); WALDHERR, Manfred, 4040 Linz (AT)
(74) Vertreter: Burger, Hannes
(86) Internationale Anmeldenummer: PCT/AT2017/060210
(87) Internationale Veröffentlichungsnummer: WO 2018/039694

(56) Entgegenhaltungen:
- EP-A1- 2 639 012
- JP-A- 2004 025 237
- JP-A- 2016 043 373
- JP-B2- 3 908 097

## Beschreibung

Die Erfindung betrifft eine Biegemaschine mit einer Biegeinformations-Anzeigevorrichtung.

Bei Werkzeugmaschinen, wie beispielsweise Biegemaschinen, muss bei der bestimmungsgemäßen Verwendung bzw. beim bestimmungsgemäßen Einsatz, ein Bediener Einstell-, Zuführ- und Manipulationshandlungen durchführen. Dabei muss der Bediener seine Aufmerksamkeit im Wesentlichen gleichzeitig auf verschiedene Aspekte des Biegevorgangs bzw. der Biegemaschine und deren Umfeld richten. Gerade bei komplexen Biegevorgängen kann dies zu einer starken gedanklichen Belastung des Bedieners führen, was längerfristig zu Stress führt, wodurch sich letztendlich die Wahrscheinlichkeit für eine Fehlbedienung erhöht. Eine Biegemaschine weist zumeist ein Bedienterminal auf, auf welchem Konfigurations- bzw. Einstellungsdaten und zumeist auch eine Visualisierung des nächsten durchzuführenden Arbeitsschrittes erfolgt. Bevorzugt ist dieses Bedienterminal im seitlichen Bereich der Maschine angeordnet bzw. kann dieses mobil ausgebildet sein und so im Bereich vor der Biegemaschine positioniert werden. Auch wenn dies bereits eine Arbeitserleichterung darstellt, ist es dennoch erforderlich, dass ein Maschinenbediener stets seinen Blick, und damit seine Aufmerksamkeit, auf unterschiedliche Bereiche lenken muss. Gerade ein ständiger Wechsel des Aufmerksamkeitspunktes führt jedoch zu einer starken Ermüdung des Bedieners.

Aus dem Stand der Technik, beispielsweise der EP 2 590 040 B1, ist eine Biegemaschine bekannt, bei der am Pressbalken und insbesondere im Bereich des Arbeits- und Manipulationsraums vor dem Pressbalken, zwei Kameras angeordnet sind. Diese erfassen den Arbeitsbereich vor der Maschine, insbesondere das eingelegte Blech. Das erfasste Abbild wird an eine Datenverarbeitungseinrichtung übermittelt. Von dieser wird ausgewertet, in welcher Ausrichtung das Blech in die Biegemaschine eingelegt wurde. Bei einer, für den nächsten durchzuführenden Biegeschritt fehlerhaften Ausrichtung des Bleches, wird eine Positionskorrekturinformation erstellt und von einem Projektor auf das Blech projiziert, welcher Projektor ebenfalls am Pressbalken im vorderen Arbeits- und Manipulationsraum angeordnet ist. Somit erhält der Bediener eine Darstellung vor sich am Blech, in welcher Richtung das Blech bewegt werden muss, um für den nächsten Arbeitsschritt korrekt in der Biegemaschine eingelegt zu sein.

Die EP 2 639 012 B1 zeigt eine Metallbearbeitungsmaschine, bei der außerhalb des Bearbeitungsraums ein Projektor angeordnet ist, der Bearbeitungs- bzw. Maschinendaten auf eine Projektionsfläche im Maschinenraum projiziert.

Aus der JP 4743688 B2 ist eine Biegemaschine bekannt, bei der ein Projektor im Arbeitsbereich vor der Maschine angeordnet ist, und mittels einer Positioniervorrichtung längs des Pressbalkens verschoben wird.

Eine ähnliche Ausführung zeigt auch die JP 3908103 B2, auch hier wird ein Projektor mittels einer Vorrichtung vor dem Pressenbalken und in Längsrichtung des Pressenbalkens bewegt, und projiziert sein Bild auf die vordere Fläche des Pressbalkens.

JP 2004 025237, die als der nächstliegende Stand der Technik für den unabhängigen Anspruch 1 betrachtet wird, offenbart eine Biegemaschine, bei der im Vorderbereich der Biegemaschine zwei Projektoren auf Positioniervorrichtungen längsverschieblich angeordnet sind und ein gemeinsames Bild am Pressbalken projizieren. Im Maschineninnenraum ist eine Kamera auf einer Positioniervorrichtung angeordnet und kann längs des Pressbalkens bewegt und ferner um die Z-Achse verschwenkt bzw. gedreht werden.

Bei den vorbekannten Systemen ist der Projektor bzw. eine Montage bzw. Manipulationsvorrichtung im Bereich vor der Maschine angeordnet. Zumeist ist die Montage- bzw. Manipulationsvorrichtung am Pressbalken angeordnet und bewegt sich somit mit diesem während des Biegevorgangs mit. Eine Anordnung im Bereich vor der Biegemaschine hat jedoch den entscheidenden Nachteil, dass hier Manipulationshandlungen beim Einlegen bzw. Entnehmen des Bleches stattfinden. Ferner kommt es während des Biegevorgangs zu einem Aufbiegen des Bleches, wobei als mechanische Grenze ein Aufbiegen bis zum Pressbalken möglich ist. Das Einlegen bzw. Entnehmen des Bleches erfolgt speziell bei größeren und schwereren Blechteilen zumeist mit einem Kran, insbesondere einem Hallenkran, sodass das Blech von oben zugeführt und nach oben entnommen wird. Für eine in diesen Bereich vor dem Pressbalken angeordnete bzw. hineinragende Vorrichtung, wie beispielsweise die vorbekannte Montage- bzw. Positioniervorrichtung, besteht nun ein besonders großes Beschädigungsrisiko durch Manipulationshandlung bzw. durch das sich aufbiegende Blech.

Aus dem Stand der Technik, beispielsweise der EP 2 639 012 B1, ist bekannt, einen Projektor im seitlichen Bereich der Maschine anzuordnen. Eine ähnliche Lösung mit zwei Projektoren zeigt auch die JP 390809 B2, wobei hier die beiden Projektoren zur Längserstreckung des Pressbalkens parallel verschiebbar angeordnet sind. Eine Anordnung eines Projektors im Seitenbereich einer Biegepresse würde die Probleme hinsichtlich der Beschädigung aufgrund von Manipulationshandlungen reduzieren. Allerdings ergibt sich bei einer derartigen Anordnung ein Problem aufgrund des Projektionsabstandes bzw. der Anordnung hervorgerufenen Verzerrungen. Dieses Problem wird umso massiver, je größer die Längserstreckung des Pressbalkens ist. Werden beidseits der Biegepresse Projektoren angebracht, bedeutet dies einerseits einen erhöhten Aufwand und verdoppelt gleichzeitig das Risiko einer Beschädigung des Projektors. Die Probleme aufgrund der starken Verzerrungen bei der Projektion können auch mit einer solchen Ausführung nicht gelöst werden, insbesondere besteht auch hier das Problem der starken Verzerrungen bei einem großen Pressbalken.

Aus der JP 5856860B2 ist eine Blech-Einleghilfe bekannt, bei der eine Kamera im Maschinenraum auf den Hinteranschlag und das eingelegte Blech gerichtet ist. Im erfassten Abbild wird eine Blechkante oder ein markanter Punkt des Bleches ermittelt und mit einer Sollposition verglichen. Bei einer Abweichung wird von einem Projektor eine Markierung auf das Blech projiziert, auf die das Blech in Bezug zum Hinteranschlag ausgerichtet werden muss. Die Kamera und der Projektor sind an einer Vorrichtung angebracht, welche parallel zum Pressbalken bewegbar ist.

Die Aufgabe der Erfindung besteht nun darin, eine Biegemaschine mit einer Vorrichtung zur Darstellung von Biegeinformationen auszustatten, wobei die Darstellungsvorrichtung durch den bestimmungsgemäßen Gebrauch der Biegemaschine nicht gefährdet bzw. beschädigt werden kann. Die Aufgabe der Erfindung besteht auch darin die aus dem Stand der Technik bekannten Probleme hinsichtlich der Darstellung entlang eines langen Pressbalkens zu beheben und eine weitestgehend unverzerrte Projektion relevanter Biegeinformation längs des Pressbalkens zu ermöglichen.

Die Aufgabe der Erfindung wird gelöst durch eine Biegemaschine mit einer Biegeinformations-Anzeigevorrichtung, wobei die Biegemaschine einen Maschinenrahmen und einen längserstreckten, feststehenden Maschinentisch und einen längserstreckten Pressbalken aufweist, welcher Pressbalken im Maschinenrahmen geführt und von einem Antriebsmittel relativ zu diesem beweglich aufgenommen ist. Die Längserstreckung und die Bewegungsrichtung des Pressbalkens spannen eine Arbeitsebene auf, ferner wird im Wesentlichen normal auf die Arbeitsebene und durch eine obere Flachseite des Maschinentisches bzw. eines angeordneten Unterwerkzeugs, eine Einlegebene aufgespannt. Der Maschinenrahmen weist ferner zwei Seitenteile auf, welche in Richtung der Längserstreckung des Maschinentisches und des Pressbalkens durch eine Maschinenbreite voneinander distanziert sind. Auch legt die Arbeitsebene einen vorderen Arbeits- und Manipulationsraum und einen davon abgegrenzten, und insbesondere abgeschlossenen, hinteren Maschinenraum fest. Im hinteren Maschinenraum und oberhalb der Einlegeebene ist ein Projektor angeordnet, welcher einen von der Einlegeebene weg gerichteten Strahlengang, insbesondere einen nach oben gerichteten Strahlengang aufweist. Im Arbeits- und Manipulationsraum ist ferner ein Reflektor mit einer ersten reflektierenden Fläche angeordnet. Die erste reflektierende Fläche ist gegenüber der Horizontalen um einen Winkel verschwenkt angeordnet, sodass ein aus dem Strahlengang des Projektors einfallender Lichtstrahl, die erste reflektierende Fläche als abgehender Lichtstrahl eines Strahlengangs des Projektors in Richtung der Einlegeebene verlässt.

Aufgrund der üblichen Ausrichtung der Biegemaschine, ist die Arbeitsebene vertikal und die Einlegeebene horizontal ausgerichtet. Im Fall eines im Maschinentisch angeordneten Unterwerkzeugs, ist die Einlegeebene mit einem Abstand parallel zum Maschinentisch ausgerichtet, wobei der Abstand durch die Höhe der Arbeitskante des Unterwerkzeugs über dem Maschinentisch festgelegt ist.

Unter einem von der Einlegeebene weg gerichteten Strahlengang wird insbesondere verstanden, dass der vom Projektor entlang des Strahlengangs abgegebene Lichtstrahl, nicht auf direktem Weg zur Einlageebene gelangen kann.

Mit dieser Ausführung wird in vorteilhafter Weise erreicht, dass ein Projektor in einem geschützten Bereich angeordnet ist, und durch die bestimmungsgemäßen Umformungsarbeiten der Biegepresse nicht oder höchst unwahrscheinlich beschädigt werden kann. Alle Vorbauten im Arbeits- und Manipulationsraum sind durch die Rüstarbeiten, Material Zustellung und Entnahme und durch das sich aufbiegende Blech, stets der Gefahr der Beschädigung ausgesetzt. Ebenfalls von Vorteil der gegenständlichen Ausführung ist, dass dadurch der Strahlengang von oben (vom oberen Bereich der Biegemaschine) kommt, und der abgehende Strahlengang somit durch Arbeits- und Bedienhandlungen nicht oder nur geringfügig beeinträchtigt wird, insbesondere ist eine Abschattung durch den Bediener unwahrscheinlich.

Nach einer Weiterbildung ist vorgesehen, dass der Projektor und/oder der Reflektor in einer Verschwenkvorrichtung am Maschinenrahmen angeordnet ist, sodass der Strahlengang über einen Abschnitt längs der Längserstreckung ausgerichtet werden kann. Mit dieser Ausbildung ist es in vorteilhafter Weise möglich, von einer Anordnungsposition des Projektors, den Strahlengang so zu lenken, dass zumindest ein Teilabschnitt der sich in Längserstreckung erstreckenden Breite der Maschine erreicht werden kann. Beispielsweise ist es möglich, den Projektor im Bereich der Mitte der Maschinenbreite anzuordnen, um so den Strahlengang von der Mitte bis zu seitlichen Bereichen lenken zu können.

Nach einer Weiterbildung ist auch vorgesehen, dass der Projektor und/oder der Reflektor an einem, oder im Bereich der Seitenteile angeordnet ist. Dies hat den Vorteil, dass der Projektor dadurch zumindest teilweise durch die zumeist massiven Seitenteile des Maschinenrahmens geschützt ist. Auch sind in diesem Bereich der Maschine die Platzverhältnisse meist günstiger, um den Projektor anordnen zu können.

Eine Weiterbildung besteht auch darin, dass der Maschinentisch, und/oder ein in der Einlegebene angeordnetes, umzuformendes Blech und/oder eine Bodenfläche im vorderen Arbeits- und Manipulationsraum und/oder eine Oberfläche eines im Pressbalken angeordneten Biegewerkzeugs, eine erste Anzeigefläche bilden. Diese Ausbildung hat den Vorteil, dass vorhandene Flächen im Arbeitsbereich, bzw. das Werkstück selbst, als Projektionsfläche verwendet werden können. Das Blech als Anzeigefläche hat den Vorteil, dass relevante Biegeinformation direkt am Werkstück darstellbar ist, sodass der Bediener keinen zusätzlichen Blickvorgang benötigt, um die Information zu erfassen. Der Boden als Projektionsfläche hat wiederum den Vorteil, dass bereits beim Zutritt zur Maschine, bzw. beim Einlegen des Bleches in die Maschine, die relevante Biegeinformation dargestellt wird. Insbesondere ist jedoch von Vorteil, dass aufgrund der spezifischen Projektion, alle vorhandenen, im Wesentlichen horizontal ausgerichteten Flächen, als Anzeigemittel verwendbar sind.

Eine weitere vorteilhafte Ausführung besteht darin, dass der Projektor und/oder der Reflektor, in einer, parallel zur Längserstreckung ausgerichtet angeordneten Führung, beweglich angeordnet ist. Da eine Biegepresse gegebenenfalls eine große Längserstreckung aufweist, und Bearbeitungsschritte entlang dieser Längserstreckung durchgeführt werden, hat diese Weiterbildung den Vorteil, dass der Projektor und/oder der Reflektor, an den jeweiligen Ort des nächsten Bearbeitungsschritts bewegt werden kann. Somit kann die Optik des Projektors einfacher und verzerrungsärmer ausgeführt werden, da kein so großer Bereich abgedeckt werden muss.

Diesbezüglich ist auch eine Weiterbildung von Vorteil, nach der der Projektor und/oder der Reflektor, über ein Antriebsmittel mit der Führung bewegungsverbunden ist. Somit wird es bspw. möglich, dass von einer Maschinensteuerung die Bewegung bzw. Positionierung des Projektors und/oder des Reflektors gesteuert wird. In der Maschinensteuerung wird meist ein Biegeplan hinterlegt sein, welcher auch die Abfolge der einzelnen Biegeschritte festlegt. Somit kann der Projektor und/oder der Reflektor vor jedem Arbeitsschritt an die Position des nächsten durchzuführenden Arbeitsschrittes bewegt werden. Dadurch erhält der Bediener die klare Information, an welcher Werkzeug-Rüstposition entlang der Längserstreckung, der folgende Umformungsschritt erfolgt.

Von Vorteil ist ferner eine Weiterbildung, nach der der Reflektor eine zweite reflektierende Fläche aufweist, wobei die erste und die zweite reflektierende Fläche im Strahlengang des Projektors angeordnet sind und dass Flächen-Normalvektoren der beiden Flächen einen Winkel zueinander einschließen.

Gemäß einer weiteren Ausbildung ist vorgesehen, dass der Pressbalken eine zweite Anzeigefläche bildet. Da der Pressbalken zumeist eine große und üblicherweise eine zumeist ebene Fläche aufweist, eignet sich diese Fläche in vorteilhafter Weise als Projektionsfläche. Insbesondere dadurch, dass auch diese Fläche während des Einlege- und auch während des Biegevorgangs, von dem, vor der Biegemaschine stehenden Bearbeiters eingesehen werden kann.

Eine Weiterbildung besteht auch darin, dass der Reflektor in einer Aufnahmevorrichtung angeordnet ist, welche Aufnahmevorrichtung zwischen einer Schutzposition und einer Arbeitsposition bewegbar ist. Im Arbeits- und Manipulationsraum vor der Maschine müssen bspw. Blechteile bewegt werden, um sie in die Biegepresse einlegen zu können. Dies erfolgt bei kleinen Teilen von Hand, jedoch ist auch eine Zustellung mit einem Gabelstapler und/oder einem Hallenkran möglich. Dies birgt jedoch für alle Vor- bzw. Anbauten an die Biegepresse, welche sich im Arbeits- und Manipulationsraum befinden, eine bedeutende Gefahr einer Beschädigung durch diese Manipulationsarbeiten. Der Schutzbereich kann bspw. so festgelegt sein, dass die Aufnahmevorrichtung dann nicht, oder nur minimal, in den Arbeits- und Manipulationsraum ragt, und somit vor einer Beschädigung durch bestimmungsgemäße Manipulationshandlungen geschützt ist.

Dahingehend ist nach einer Weiterbildung vorgesehen, dass die Aufnahmevorrichtung in der Schutzposition hinter der Arbeitsebene, insbesondere im Bereich des hinteren Maschinenraums, angeordnet ist. Mit dieser Weiterbildung ist gewährleistet, dass während bestimmungsgemäßer Manipulationsarbeiten, der Bereich vor der Maschine völlig freigehalten ist, und die Aufnahmevorrichtung somit bestmöglich geschützt ist.

Dahingehend besteht eine Weiterbildung auch darin, dass die Aufnahmevorrichtung in der Schutzposition über dem Projektor angeordnet ist. Damit wird zusätzlich zum zuvor beschriebenen Schutz der Aufnahmevorrichtung, auch ein Schutz des Projektors durch die anspruchsgemäß darüber angeordnete Aufnahmevorrichtung erreicht.

Nach einer Weiterbildung ist vorgesehen, dass der Projektor durch einen Laser mit Ablenkeinheit gebildet ist. Ein Laser, bzw. allgemein eine Lichtquelle die einen stark gerichteten Strahl abgibt, hat den Vorteil, dass sich die auf der Anzeigefläche darzustellenden Information gut gegenüber dem Untergrund abhebt.

Eine Weiterbildung besteht auch darin, dass der Projektor mit einer Maschinensteuerung und/oder einem Prozessleitsystem verbunden ist, und eine datentechnische Verbindung zu einem Arbeitsvorbereitungs- bzw. CAD-System besteht. Somit ist es in vorteilhafter Weise möglich, Arbeitsdaten und insbesondere Informationen zu jedem einzelnen Biegeschritt direkt an die Biegemaschine zu übermitteln, bzw. direkt von der Maschine abholen zu lassen.

Eine weitere Ausbildung besteht darin, dass die Biegeinformation gebildet ist durch zumindest eines der Gruppe Werkstückkontur, Biegelinie, Bedienfeld, Statusdaten des Pressbalkens, Ausrichtinformation, Sollwinkel, Stückzähler und Bereiche am umzuformenden Blech mit einem erhöhten Verletzungsrisiko während des Biegevorgangs. Insbesondere können jegliche Biegeprogrammdaten visualisiert werden. Mittels der Werkstückkontur lässt sich gewährleisten, dass dem Bediener eindeutig und klar dargestellt werden kann, wie ein Werkstück für den nächsten Bearbeitungsschritt in der Biegepresse eingelegt werden muss. Bei Manipulationsvorgängen ist das Blech vom Bediener zu fassen, wobei es mit der gegenständlichen Weiterbildung möglich ist, am Werkstück jene Bereiche zu visualisieren, in denen im Biegevorgang ein Verletzungsrisiko durch das sich umformende Blech besteht.

Eine vorteilhafte Weiterbildung besteht auch darin, dass die Biegeinformation eine animierte Ausrichtinformation umfasst. Gerade bei der Bearbeitung geringer Stückzahlen besteht immer wieder das Problem, dass ein Bediener mit den Manipulationsschritten des Bleches nicht vertraut ist. Dadurch kann es zu einer deutlichen Reduktion des Durchsatzes kommen, und/oder es steigt die Gefahr für eine Fehlbedienung bzw. eine Fehlausrichtung, was meist zu einem fehlerhaften Teil führt. Nach dieser Weiterbildung ist es möglich, jene erforderlichen Schritte darzustellen, um das umzuformende Werkstück von einer Bearbeitungsposition in die nächste Bearbeitungsposition zu bringen. Dies umfasst sowohl die Ausrichtung des Werkstücks in Bezug zur Biegelinie, als auch die Station, an welcher der folgende Biegeschritt durchgeführt werden muss.

Gemäß einer Weiterbildung ist die erste und/oder die zweite Anzeigefläche an diskreten Positionen entlang der Längserstreckung ausgebildet. Dies hat den Vorteil, dass einem Bediener direkt am Ort des nächsten Bearbeitungsschritts die diesen Biegevorgang betreffende Information angezeigt wird.

Eine Weiterbildung, nach der im Strahlengang des Projektors eine Strahlablenkvorrichtung angeordnet ist, hat den Vorteil, dass dadurch mit einem in Bezug zur Biegemaschine feststehenden Projektor dennoch eine Projektion längs der Längsachse möglich ist, ohne dass am Projektor eine starke Weitwinkeloptik angebracht sein müsste, welche Bildverzerrungen hervorrufen würde.

Ebenfalls von Vorteil ist eine Weiterbildung, nach der mit der Maschinensteuerung eine Positionsortungs- und/oder Kommandoabgabevorrichtung verbunden ist. Diese Weiterbildung hat den Vorteil, dass die Position eines Bedieners im Arbeits- und Manipulationsraum vor der Biegemaschine ermittelt werden kann. Die Maschinensteuerung kann somit bspw. eine Gefahrensituation erkennen und einen Biegevorgang ggf. abbrechen bzw. nicht auslösen.

Dahingehend vorteilhaft ist, wenn die Verbindung drahtlos ausgebildet ist, insbesondere über Funk und/oder über Schall, insbesondere Ultraschall. Die Verwendung von Kabeln im Arbeitsbereich stellt aufgrund der damit verbundenen Stolpergefahr ein nicht unbeträchtliches Sicherheitsrisiko dar. Eine kabellose Verbindung ist daher von Vorteil, da somit auch die Bewegungsfreiheit des Bedieners nicht eingeschränkt wird.

Nach einer Weiterbildung ist vorgesehen, dass die Positionsortungs- und/oder Kommandoabgabevorrichtung durch ein Bekleidungsstück, insbesondere einen Schuh gebildet ist. Beispielsweise kann der Schuh wie in AT 510 950 A2 beschrieben ausgebildet sein.

Zum besseren Verständnis der Erfindung wird diese anhand der nachfolgenden Figuren näher erläutert.

Es zeigen jeweils in stark vereinfachter, schematischer Darstellung:
- Fig. 1: eine vereinfache perspektivische Darstellung eine Ausführung der Biegemaschine mit einer Biegeinformations-Anzeigevorrichtung;
- Fig. 2: eine Seitansicht einer Ausführungsvariante der Biegemaschine mit einer Biegeinformations-Anzeigevorrichtung;
- Fig. 3: eine Seitansicht einer weiteren Ausführungsvariante der Biegemaschine mit einer Biegeinformations-Anzeigevorrichtung;
- Fig. 4: eine Frontansicht einer weiteren Ausführungsvariante der Biegemaschine mit einer Biegeinformations-Anzeigevorrichtung;
- Fig. 5: eine weitere mögliche Ausführungsvariante der Biegemaschine mit einer Biegeinformations-Anzeigevorrichtung.

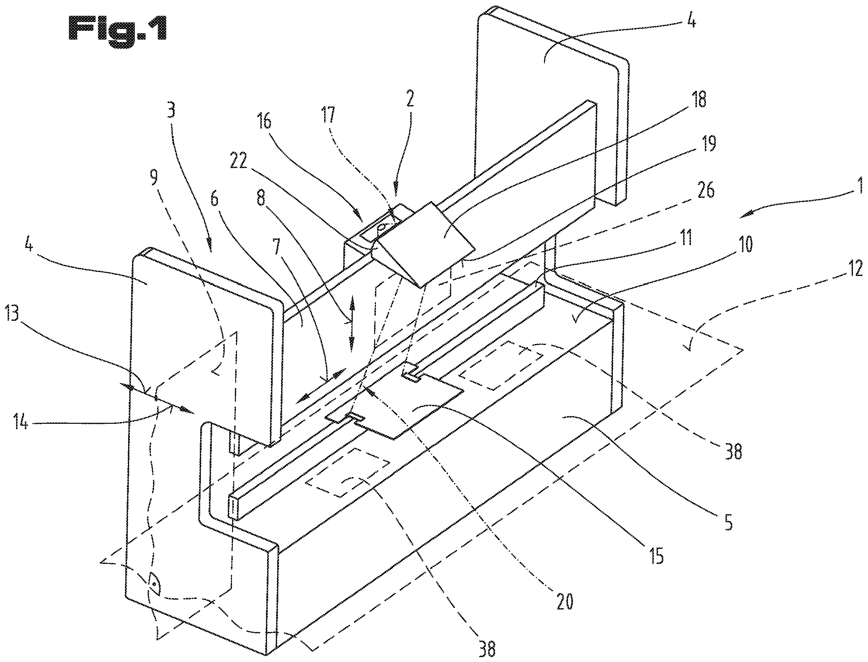

Fig. 1 zeigt schematisch eine gegenständliche Biegemaschine 1 mit einer Biegeinformations-Anzeigevorrichtung 2. Die Biegemaschine 1 weist einen Maschinenrahmen 3 mit zwei Seitenteilen 4 und einen Maschinentisch 5 auf. Im Maschinenrahmen 3 ist ferner ein Pressbalken 6 aufgenommen und relativ zum Maschinenrahmen 3 beweglich geführt, wobei die Relativbewegung von einem nicht dargestellten Antriebsmittel durchgeführt wird. Die Längserstreckung 7 und die Bewegungsrichtung 8 des Pressbalkens 6 spannen eine Arbeitsebene 9 auf. Normal dazu ist durch eine obere Flachseite 10 des Maschinentisches 5 bzw. durch ein am Maschinentisch 5 angeordnetes Unterwerkzeug 11 eine Einlegeebene 12 aufgespannt. Durch die Arbeitsebene 9 wird ein hinterer Maschinenraum 13 und ein vorderer Arbeits- und Manipulationsraum 14 festgelegt. Sämtliche Bedienhandlungen der Biegemaschine 1 sowie sämtliche Manipulationshandlungen des umzuformenden Blechteils 15 erfolgen im vorderen Arbeits- und Manipulationsraum 14.

Im hinteren Maschinenraum 13 und oberhalb der Einlegeebene 12 ist ein Projektor 16 angeordnet, welcher einen Strahlengang 17 aufweist, der von der Einlegeebene 12 weggerichtet ist. Insbesondere kann dieser Projektor-Strahlengang 17 nach oben, horizontal oder schräg nach unten gerichtet sein, wobei jedoch ein Lichtstrahl des Projektor-Strahlengangs 17 die Einlegeebene 12 im Bereich des Maschinentisches 5 nicht auf direktem Weg erreichen kann. Daher ist ferner im Arbeits- und Manipulationsraum 14 ein Reflektor 18 mit einer ersten reflektierenden Fläche 19 angeordnet. Die erste reflektierende Fläche 19 ist dabei gegenüber der Horizontalen um einen Winkel verschwenkt angeordnet, sodass ein aus dem Strahlengang 17 des Projektors 16 einfallender Lichtstrahl, die erste reflektierende Fläche 19 als abgehender Lichtstrahl eines Strahlengangs 20 des Reflektors 18 verlässt.

Auf dem Blechteil 15 wird als Biegeinformation beispielsweise eine markante Kontur des Werkstücks projiziert, um dem Bediener dadurch die korrekt ausgerichtete Einlegeposition kennzeichnen zu können. Neben einer Projektion auf das Blechteil 15 ist es jedoch auch möglich, auf die Flachseite 10 des Maschinentisches 5 zu projizieren.

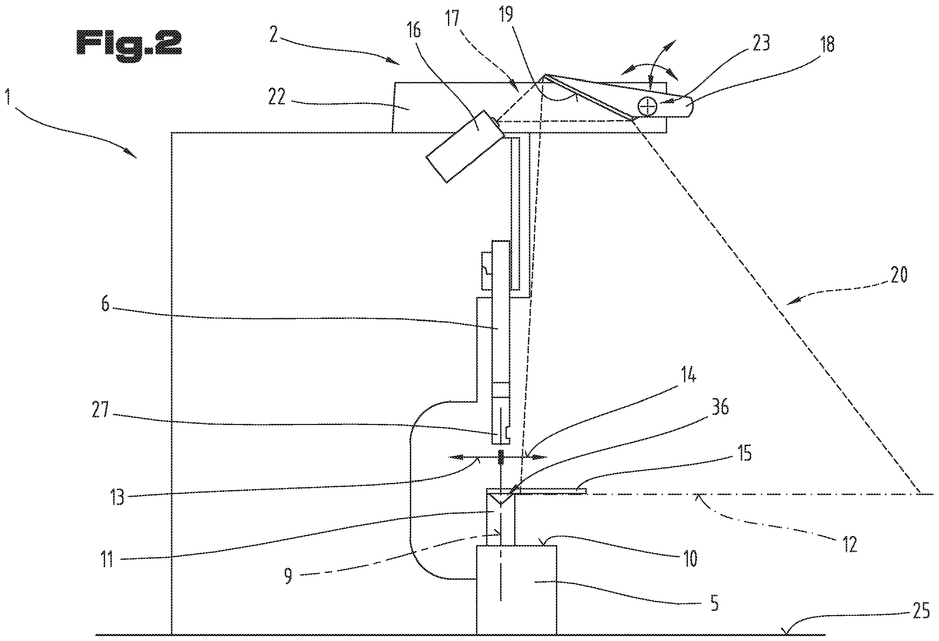

Fig. 2 zeigt eine Seitenansicht in Schnittdarstellung auf die Biegemaschine 1, insbesondere zur Verdeutlichung der Anordnung des Projektors 16 und des Reflektors 18 der Biegeinformations-Anzeigevorrichtung 2. Die Blickrichtung ist dabei parallel zur Arbeitsebene 9 und Einlegeebene 12 gewählt, der Schnittpunkt der beiden Ebenen stellt die Biegelinie 36 dar, also jene Linie, an der ein im Pressbalken 6 angeordnetes Oberwerkzeug 27 ein eingelegtes Blechteil kontaktiert und ein im Maschinentisch 5 angeordnetes Unterwerkzeug 11 drückt.

Der Projektor 16 ist dabei derart angeordnet, dass der vom Projektor 16 abgegebene Strahlengang 17 nicht in Richtung der Einlegeebene 12 ausgerichtet ist. Insbesondere ist im Strahlengang 17 des Projektors 16 ein Reflektor 18 mit einer ersten reflektierenden Fläche 19 angeordnet, welcher Reflektor bzw. welche reflektierende Fläche 19 einen, aus dem Strahlengang 17 des Projektors 16 eintreffenden Lichtstrahl, in einen abgehenden Lichtstrahl des Strahlengangs 20 des Reflektors 18 umlenkt. Der abgehende Strahlengang 20 des Reflektors 18 wird in Richtung der Einlegeebene 12 bzw. des Maschinentisches 5 gelenkt und trifft dort auf eine weitestgehend horizontal ausgerichtete Projektionsfläche auf. Die Projektionsfläche kann nun durch den in der Einlegebene 12 angeordneten Blechteil 15, oder durch eine weitestgehend horizontal orientierte Flachseite 10 des Maschinentisches 5 gebildet sein. Es ist jedoch auch möglich, dass die Projektion am Boden 25 vor der Biegemaschine 1 erfolgt, wobei auch Kombinationen der einzelnen Projektionsmöglichkeiten möglich sind.

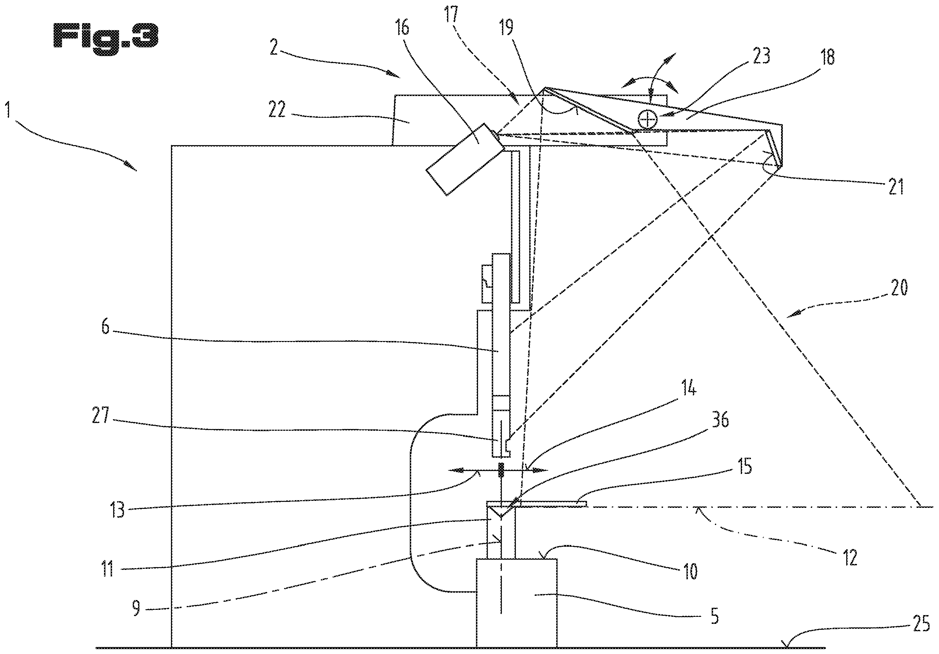

Fig. 3 zeigt eine weitere, mögliche Ausführung der Biegeinformations-Anzeigevorrichtung 2 an einer Biegemaschine 1. Bei dieser Ausführung weist der Reflektor 18 neben der ersten reflektierenden Fläche 19 eine zweite reflektierende Fläche 21 auf, wobei die Flächennormalen auf die beiden reflektierenden Flächen 19, 21 einen Winkel zueinander einschließen. Bevorzugt wird die von den Flächennormalen aufgespannte Ebene normal auf die Arbeitsebene 9 und normal auf die Einlegeebene 12 ausgerichtet sein. Vom Projektor 16 wird der Strahlengang 17 in Richtung des Reflektors 18, und damit in Richtung der ersten 19 und zweiten 21 reflektierenden Fläche abgegeben. Insbesondere ist vorgesehen, dass vom Projektor 16 lediglich ein gemeinsamer Strahlengang 17 in Richtung des Reflektors 18 abgegeben wird. Der Reflektor 18 ist bevorzugt in einer Aufnahmevorrichtung 22 angeordnet, wobei diese in den Fig. 2 und 3 lediglich schematisiert dargestellt ist. Diese Aufnahmevorrichtung 22 kann beispielsweise als Verschwenkvorrichtung ausgebildet sein und ermöglicht es, den Reflektor 18 um eine zur Arbeitsebene 9 und zur Einlegeebene 12 parallele Achse 23 zu verschwenken. Gemäß einer weiteren Ausführung kann der Reflektor 18 in einer Verschwenkvorrichtung aufgenommen sein, welche zusätzlich oder alternativ eine Verschwenkung des Reflektors 18 bzw. der Achse 23 um eine Achse normal zur Arbeitsebene ermöglicht.

Bei einer Ausführung gemäß Fig. 2 ermöglicht eine Verschwenkvorrichtung eine Verlagerung des projizierten Bildes, beispielsweise zwischen dem Maschinentisch 5, dem Blechteil 15 und/oder dem Fußboden. Bei entsprechender Verschwenkung ist es jedoch auch möglich, das Bild auf den Pressbalken 6 zu projizieren.

Da für eine im vorderen Arbeits- und Manipulationsraum 14 angeordnete Vorrichtung stets die Gefahr einer Beschädigung durch Manipulationshandlungen am Blechteil 15 bzw. durch das sich aufbiegende Blech besteht, kann gemäß einer weiteren Ausbildung vorgesehen sein, dass die Aufnahmevorrichtung 22 derart ausgebildet ist, dass der Reflektor 18 zwischen einer Arbeitsposition und einer Schutzposition bewegt werden kann. In der Arbeitsposition ist der Reflektor 18, wie in den Fig. 2 und 3 dargestellt, im Arbeits- und Manipulationsraum 14 angeordnet, für Manipulationshandlungen mit dem Blechteil, insbesondere beim Einlegen bzw. Entnehmen des Blechteils 15 in die Biegemaschine 1, kann der Reflektor 18 in die Schutzposition bewegt werden. In der Schutzposition ist der Reflektor im Bereich des hinteren Maschinenraums 13 angeordnet und somit vor Beschädigungen durch sich bewegende Teile im vorderen Bereich der Biegemaschine geschützt. Gemäß einer weiteren Ausführung kann ferner vorgesehen sein, dass der Reflektor in der Schutzposition über dem Projektor 16 angeordnet ist und somit auch diesen vor Beschädigungen schützen kann.

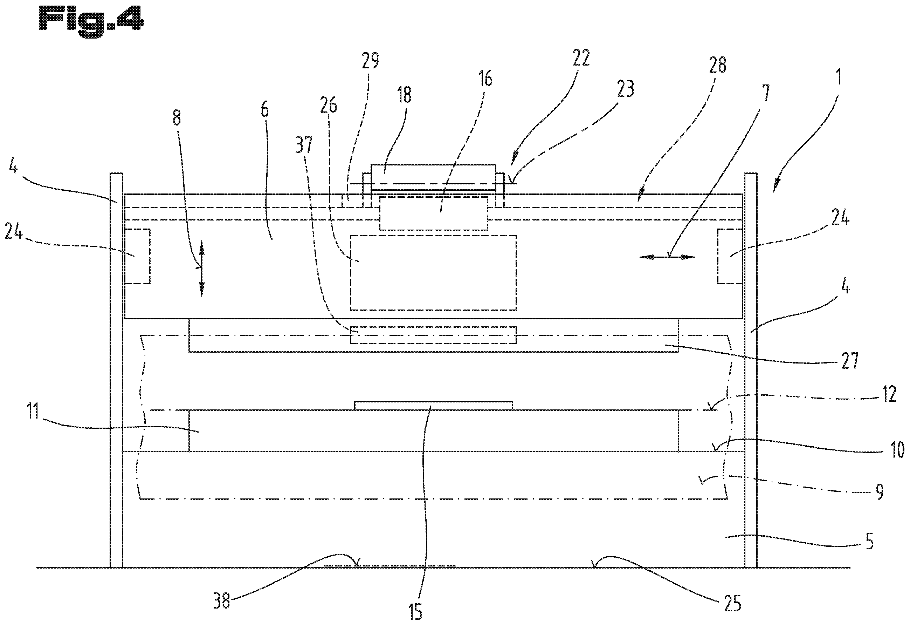

Fig. 4 zeigt eine Frontansicht der gegenständlichen Biegemaschine 1. Die Biegemaschine 1 weist zwei Seitenteile 4 auf, welche durch den längserstreckten 7 Maschinentisch 5 voneinander distanziert sind. In den Seitenteilen 4 geführt ist ein Pressbalken 6 angeordnet, welcher angetrieben von einem Antriebsmittel 24, relativ zu den Seitenteilen 4 beweglich ist. Die Bewegungsrichtung 8 und die Längserstreckung 7 spannen eine Arbeitsebene 9 auf, normal dazu spannen die Längserstreckung 7 und eine Flachseite 10 des Maschinentisches 5, oder ein im Maschinentisch 5 angeordnetes Unterwerkzeug 11, eine Einlegeebene 12 auf.

Im hinteren Maschinenraum und oberhalb der Einlegeebene 12 ist ein Projektor 16 angeordnet, ferner ist im Arbeits- und Manipulationsraum und ebenfalls oberhalb der Einlegeebene 12 ein Reflektor 18 angeordnet, wobei der Reflektor 18 bevorzugt in einer Aufnahmevorrichtung 22 angeordnet ist. Die Aufnahmevorrichtung 22 kann auch als Verschwenkvorrichtung ausgebildet sein, wie dies in den Fig. 2 und 3 beschrieben ist.

Gemäß einer Ausführung wie sie in Fig.2 beschrieben ist, wird vom Projektor 16 ein Strahlengang auf eine erste reflektierende Fläche des Reflektors 18 gelenkt und von diesem in Richtung einer horizontal bzw. annähernd horizontal ausgerichteten Fläche abgelenkt. Insbesondere auf eine Flachseite des eingelegten Blechteils 15, und/oder eine obere Flachseite 10 des Maschinentisches 5 und/oder auf den Boden 25 vor der Biegemaschine 1.

Zusätzlich kann der Reflektor 18 um eine Achse 23 verschwenkbar ausgebildet sein, sodass ein Reflektor 18 mit einer ersten reflektierenden Fläche alternativ bzw. zeitlich hintereinander eine Anzeigefläche 26 am Pressbalken, eine Anzeigefläche 37 am Oberwerkzeug 27, sowie eine Darstellung am Blechteil 15, auf der Flachseite 10 des Maschinentisches 5 projiziert werden kann. Ferner ist es jedoch auch möglich, dass die Anzeigefläche 38 am Boden 25 vor der Biegemaschine 1 ausgebildet ist. Es ist jedoch auch möglich, dass auf mehrere Anzeigeflächen gleichzeitig projiziert wird, insbesondere gleichzeitig auf horizontal und vertikal ausgerichtete Anzeigeflächen, wobei die dabei entstehenden starken Verzerrungen des projizierten Abbildes bei der Erzeugung des Bildes durch eine nicht dargestellte Steuerungseinheit korrigiert werden können, um dennoch ein weitestgehend unverzerrtes Bild projizieren zu können.

Bei einer zweigeteilten Ausführung des Reflektors 18, insbesondere mit einer ersten und zweiten reflektierenden Fläche, ist sichergestellt, dass gleichzeitig eine Projektion sowohl auf horizontale Flächen 15, 10, 25, als auch auf vertikale Anzeigeflächen 26, 37, möglich ist. Die zweigeteilte Ausführung verhindert insbesondere die sonst vorkommenden starken Bildverzerrungen.

Gemäß einer weiteren Ausführung kann vorgesehen sein, dass der Projektor 16 und/oder der Reflektor in einer, parallel zur Längserstreckung 7 ausgerichtet angeordneten Führung 28 längsverschieblich angeordnet ist, um beispielsweise von einem Antriebsmittel 29 der Führung 28 in Richtung der Längserstreckung 7 bewegt zu werden. Somit ist es möglich, die Darstellung der Biegeinformation, insbesondere die Position des nächsten Einlege- bzw. Bearbeitungsschrittes dem Benutzer anzuzeigen.

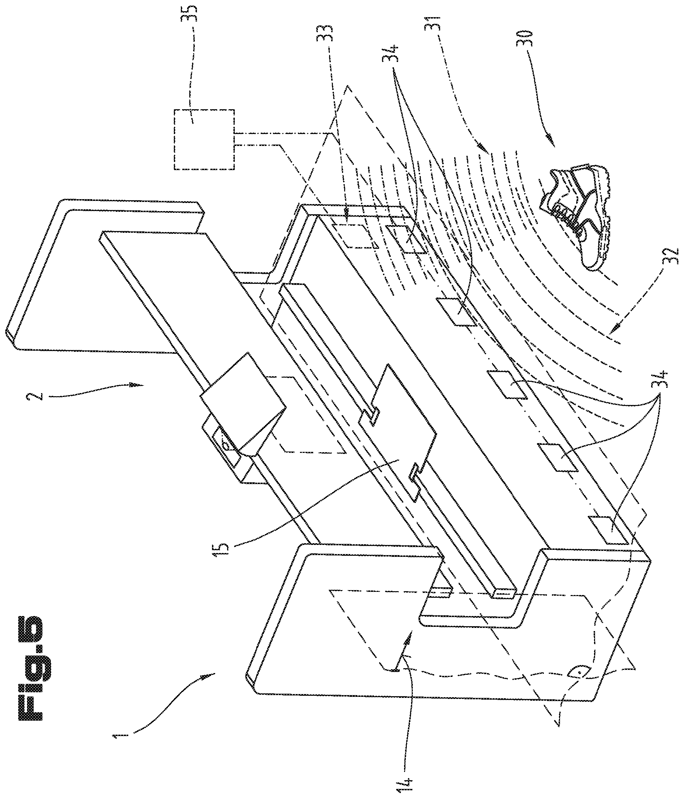

Fig. 5 zeigt eine weitere mögliche Ausführung bei der mit der Maschinensteuerung 35 eine Positionsortungs- und/oder Kommandoabgabevorrichtung 30 verbunden ist. Bevorzugt ist die Positionsortungs- und/oder Kommandoabgabevorrichtung 30 durch einen Schuh gebildet. Die Vorrichtung 30 ist dabei über eine erste 31 und zweite 32 Kommunikationsverbindung mit zumindest einer ersten 33 und zweiten 34 Gegenstelle verbunden. Die erste Kommunikationsverbindung 31 ist bevorzugt eine Funkverbindung, die zweite Kommunikationsverbindung 32 ist bevorzugt eine Ultraschallverbindung. Durch Ermittlung der Laufzeitdifferenzen zwischen den Signalen auf der ersten 31 und zweiten 32 Kommunikationsverbindung, kann die Maschinensteuerung 35 die Position des Schuhs, und damit die Position des Bedieners im Arbeits- und Manipulationsraum 14 vor der Biegemaschine 1 ermitteln. Manipulationsarbeiten am eingelegten Blechteil 15 machen eine Positionierung des Bedieners rechts oder links vom eingelegten Blechteil 15 erforderlich. Durch Kenntnis der Position des Schuhs als Positionsortungs- und/oder Kommandoabgabevorrichtung 30 kann die Biegeinformations-Anzeigevorrichtung 2 von der Maschinensteuerung 35 derart angesteuert werden, dass die darzustellende Information auf der korrekten Seite vom Blechteil 15 dargestellt wird.

Der besondere Vorteil der gegenständlichen Biegemaschine mit einer Biegeinformations-Anzeigevorrichtung liegt nun darin, dass die Biegeinformations-Anzeigevorrichtung einfach und mit Standardkomponenten ausgeführt sein kann und vor Beschädigungen beim bestimmungsgemäßen Betrieb der Biegepresse geschützt ist. Ferner ist von Vorteil, dass einem Maschinenbediener die Information ziel- und positionsgerichtet dargestellt werden kann.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In den Figuren 3 und 4 sind weitere und gegebenenfalls für sich eigenständige Ausführungsform der Biegemaschine mit einer Biegeinformations-Anzeigevorrichtung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten der Biegemaschine mit einer Biegeinformations-Anzeigevorrichtung, wobei an dieser Stelle bemerkt sei, dass die Erfindung nicht auf die speziell dargestellten Ausführungsvarianten derselben eingeschränkt ist, sondern der Umfang der Erfindung über die Ansprüche definiert ist.

Der Ordnung halber sei abschließend darauf hingewiesen, dass zum besseren Verständnis des Aufbaus der Biegemaschine mit einer Biegeinformations-Anzeigevorrichtung diese bzw. deren Bestandteile teilweise unmaßstäblich und/oder vergrößert und/oder verkleinert dargestellt wurden.

### Bezugszeichenaufstellung

| | | | |
|---|---|---|---|
| 1 | Biegemaschine | 30 | Positionsortungs- und/oder Kommandoabgabevorrichtung |
| 2 | Biegeinformations-Anzeigevorrichtung | | |
| | | 31 | erste Kommunikationsverbindung |
| 3 | Maschinenrahmen | 32 | zweite Kommunikationsverbindung |
| 4 | Seitenteil | | |
| 5 | Maschinentisch | 33 | erste Gegenstelle |
| 6 | Pressbalken | 34 | zweite Gegenstelle |
| 7 | Längserstreckung | 35 | Maschinensteuerung |
| 8 | Bewegungsrichtung | 36 | Biegelinie |
| 9 | Arbeitsebene | 37 | Anzeigefläche |
| 10 | Flachseite | 38 | Anzeigefläche |
| 11 | Unterwerkzeug | | |
| 12 | Einlegeebene | | |
| 13 | Maschinenraum | | |
| 14 | Arbeits- und Manipulationsraum | | |
| 15 | Blechteil | | |
| 16 | Projektor | | |
| 17 | Strahlengang des Projektors | | |
| 18 | Reflektor | | |
| 19 | Erste reflektierende Fläche | | |
| 20 | Strahlengang des Projektors | | |
| 21 | zweite reflektierende Fläche | | |
| 22 | Aufnahmevorrichtung | | |
| 23 | Achse | | |
| 24 | Antriebsmittel | | |
| 25 | Boden | | |
| 26 | Anzeigefläche | | |
| 27 | Oberwerkzeug | | |
| 28 | Führung | | |
| 29 | Antriebsmittel | | |

## Patentansprüche

1. Biegemaschine (1) mit einer Biegeinformations-Anzeigevorrichtung (2),
wobei die Biegemaschine (1) einen Maschinenrahmen (3) und einen längserstreckten feststehenden Maschinentisch (5) und einen längserstreckten Pressbalken (6) aufweist, welcher Pressbalken (6) im Maschinenrahmen (3) geführt und von einem Antriebsmittel (24) relativ zu diesem beweglich aufgenommen ist, und
wobei die Längserstreckung (7) und die Bewegungsrichtung (8) des Pressbalkens (6) eine Arbeitsebene (9) aufspannen, und ferner im Wesentlichen normal auf die Arbeitsebene (9) und durch eine obere Flachseite (10) des Maschinentisch (5) bzw. eines angeordneten Unterwerkzeugs (11), ist eine Einlegeebene (12) aufgespannt, und
wobei der Maschinenrahmen (3) ferner zwei Seitenteile (4) aufweist, welche in Richtung der Längserstreckung (7) des Maschinentisches (5) und des Pressbalkens (6) durch eine Maschinenbreite voneinander distanziert sind, und
wobei die Arbeitsebene (9) einen vorderen Arbeits- und Manipulationsraum (14) und einen davon abgegrenzten, und insbesondere abgeschlossenen, hinteren Maschinenraum (13) festlegt,
**dadurch gekennzeichnet**,
o dass im hinteren Maschinenraum (13) und oberhalb der Einlegeebene (12) ein Projektor (16) angeordnet ist, welcher einen von der Einlegeebene (12) weg gerichteten Strahlengang (17), insbesondere einen nach oben gerichteten Strahlengang (17) aufweist, und
o dass im Arbeits- und Manipulationsraum (14) ein Reflektor (18) mit einer ersten reflektierenden Fläche (19) angeordnet ist, welche erste reflektierende Fläche (19) gegenüber der Horizontalen um einen Winkel verschwenkt angeordnet ist, sodass ein aus dem Strahlengang (17) des Projektors (16) einfallender Lichtstrahl, die erste reflektierende Fläche (19) als abgehender Lichtstrahl eines Strahlengangs (20) des Reflektors (18) in Richtung der Einlegeebene verlässt.

2. Biegemaschine nach Anspruch 1, **dadurch gekennzeichnet, dass** der Projektor (16) und/oder der Reflektor (18) in einer Verschwenkvorrichtung am Maschinenrahmen (3) angeordnet ist, sodass der Strahlengang (17) über einen Abschnitt längs der Längserstreckung (7) ausgerichtet werden kann.

3. Biegemaschine nach Anspruch 1, **dadurch gekennzeichnet, dass** der Projektor (16) und/oder der Reflektor (18) an einem oder im Bereich der Seitenteile (4) angeordnet ist.

4. Biegemaschine nach einem der Ansprüche 1 bis 3, **dadurch gekennzeichnet, dass** der Maschinentisch (5), und/oder ein in der Einlegebene (12) angeordnetes, umzuformendes Blech und/oder eine Bodenfläche im vorderen Arbeits- und Manipulationsraum (14) und/oder eine Oberfläche eines im Pressbalken (6) angeordneten Biegewerkzeugs, eine erste Anzeigefläche bilden.

5. Biegemaschine nach einem der Ansprüche 1 bis 4, **dadurch gekennzeichnet, dass** der Projektor (16) und/oder der Reflektor (18) in einer, parallel zur Längserstreckung (7) ausgerichtet angeordneten Führung (28), beweglich angeordnet ist.

6. Biegemaschine nach Anspruch 5, **dadurch gekennzeichnet, dass** der Projektor (16) und/oder der Reflektor (18) über ein Antriebsmittel (29) mit der Führung (28) bewegungsverbunden ist.

7. Biegemaschine nach einem der Ansprüche 1 bis 6, **dadurch gekennzeichnet, dass** der Reflektor (18) eine zweite reflektierende Fläche (21) aufweist, wobei die erste und die zweite reflektierende Fläche (21) im Strahlengang (17) des Projektors (16) angeordnet sind und dass Flächen-Normalvektoren der beiden Flächen einen Winkel zueinander einschließen.

8. Biegemaschine nach Anspruch 7, **dadurch gekennzeichnet, dass** der Pressbalken (6) eine zweite Anzeigefläche bildet.

9. Biegemaschine nach einem der Ansprüche 1 bis 8, **dadurch gekennzeichnet, dass** der Reflektor (18) in einer Aufnahmevorrichtung (22) angeordnet ist, welche Aufnahmevorrichtung (22) zwischen einer Schutzposition und einer Arbeitsposition bewegbar ist.

10. Biegemaschine nach einem der Ansprüche 9, **dadurch gekennzeichnet, dass** die Aufnahmevorrichtung (22) in der Schutzposition hinter der Arbeitsebene (9), insbesondere im Bereich des hinteren Maschinenraums (13), angeordnet ist.

11. Biegemaschine nach einem der Ansprüche 9 oder 10, **dadurch gekennzeichnet, dass** die Aufnahmevorrichtung (22) in der Schutzposition über dem Projektor (16) angeordnet ist.

12. Biegemaschine nach einem der Ansprüche 1 bis 11, **dadurch gekennzeichnet, dass** der Projektor (16) durch einen Laser mit Ablenkeinheit gebildet ist.

13. Biegemaschine nach einem der Ansprüche 1 bis 12, **dadurch gekennzeichnet, dass** der Projektor (16) mit einer Maschinensteuerung (35) und/oder einem Prozessleitsystem verbunden ist, und eine datentechnische Verbindung zu einem Arbeitsvorbereitungs- bzw. CAD-System besteht.

14. Biegemaschine nach einem der Ansprüche 1 bis 13, **dadurch gekennzeichnet, dass** die Biegeinformation gebildet ist durch zumindest eines der Gruppe Werkstückkontur, Biegelinie, Bedienfeld, Statusdaten des Pressbalkens (6), Ausrichtinformation, Sollwinkel, Stückzähler und Bereiche am umzuformenden Blech mit einem erhöhten Verletzungsrisiko während des Biegevorgangs.

15. Biegemaschine nach einem der Ansprüche 1 bis 14, **dadurch gekennzeichnet, dass** die Biegeinformation eine animierte Ausrichtinformation umfasst.

16. Biegemaschine nach einem der Ansprüche 1 bis 15, **dadurch gekennzeichnet, dass** die erste und/oder die zweite Anzeigefläche an diskreten Positionen entlang der Längserstreckung (7) ausgebildet ist.

17. Biegemaschine nach Anspruch 16, **dadurch gekennzeichnet, dass** im Strahlengang (17) des Projektors (16) eine Strahlablenkvorrichtung angeordnet ist.

18. Biegemaschine nach einem der Ansprüche 13 bis 17, **dadurch gekennzeichnet, dass** mit der Maschinensteuerung (35) eine Positionsortungs- und/oder Kommandoabgabevorrichtung (30) verbunden ist.

19. Biegemaschine nach Anspruch 18, **dadurch gekennzeichnet, dass** die Verbindung drahtlos ausgebildet ist, insbesondere über Funk und/oder über Schall, insbesondere Ultraschall.

20. Biegemaschine nach Anspruch 18 oder 19, **dadurch gekennzeichnet, dass** die Positionsortungs- und/oder Kommandoabgabevorrichtung (30) durch ein Bekleidungsstück, insbesondere einen Schuh gebildet ist.

## Claims

1. A bending machine (1) with a bending information display device (2),
wherein the bending machine (1) has a machine frame (3) and longitudinally extended machine table (5) fixed in place, and a longitudinally extended press beam (6), which press beam (6) is guided in the machine frame (3) and held by a driving means (24), so as to be movable relative to the latter, and
wherein the longitudinal extension (7) and the direction of movement (8) of the press beam (6) define a working plane (9), and furthermore, an insertion plane (12) is defined essentially normal to the working plane (9) and by an upper flat side (10) of the machine table (5) and/or of a lower tool (11) arranged on it, and
wherein the machine frame (3) further has two side parts (4), which are spaced apart from one another in the direction of the longitudinal extension (7) of the machine table (5) and the press beam (6) by a machine width , and
wherein the working plane (9) establishes a front working and manipulation space (14) and a rear machine space (13), which is delimited, in particular, closed off, from the former,
**characterized in that**
o a projector (16) is arranged in the rear machine space (13) and above the insertion plane (12), which projector has a beam path (17) directed away from the insertion plane (12), in particular a beam path (17) directed upward, and
o that a reflector (18) having a first reflective surface (19) is arranged in the working and manipulation space (14), which first reflective surface (19) is arranged so as to be pivoted by an angle relative to the horizontal, so that a beam impacting it from the beam path (17) of the projector (16) departs from the first reflective surface (19) as a departing light beam of a beam path (20) of the reflector (18) in the direction of the insertion plane.

2. The bending machine according to claim 1, **characterized in that** the projector (16) and/or the reflector (18) is/are arranged on the machine frame (3) in a pivoting device, so that the beam path (17) can be oriented over a section along the longitudinal extension (7).

3. The bending machine according to claim 1, **characterized in that** the projector (16) and/or the reflector (18) is/are arranged on a or in the region of the side parts (4).

4. The bending machine according to one of claims 1 to 3, **characterized in that** the machine table (5) and/or a sheet metal to be formed, which is arranged in the insertion plane (12), and/or a floor surface in the front working and manipulation space (14) and/or a surface of a bending tool arranged in the press beam (6) form a first display surface.

5. The bending machine according to one of claims 1 to 4, **characterized in that** the projector (16) and/or the reflector (18) is/are arranged, in movable manner, in a guide (28) that is arranged oriented parallel to the longitudinal extension (7).

6. The bending machine according to claim 5, **characterized in that** the projector (16) and/or the reflector (18) is/are connected with the guide (28) so as to move, by way of a driving means (29).

7. The bending machine according to one of claims 1 to 6, **characterized in that** the reflector (18) has a second reflective surface (21), wherein the first and the second reflective surface (21) are arranged within the beam path (17) of the projector (16), and that surface normal vectors of the two surfaces enclose an angle relative to one another.

8. The bending machine according to claim 7, **characterized in that** the press beam (6) forms a second display surface.

9. The bending machine according to one of claims 1 to 8, **characterized in that** the reflector (18) is arranged in a receiving device (22), which receiving device (22) can be moved between a protection position and a working position.

10. The bending machine according to one of claims 9, **characterized in that** the receiving device (22) is arranged behind the working plane (9), in particular in the region of the rear machine space (13), in the protection position.

11. The bending machine according to one of claims 9 or 10, **characterized in that** the receiving device (22) is arranged above the projector (16) in the protection position.

12. The bending machine according to one of claims 1 to 11, **characterized in that** the projector (16) is formed by a laser having a deflection unit.

13. The bending machine according to one of claims 1 to 12, **characterized in that** the projector (16) is connected with a machine controller (35) and/or a process guide system, and that a data-technology connection to a work preparation system and/or CAD system exists.

14. The bending machine according to one of claims 1 to 13, **characterized in that** the bending information is formed by at least one of the group of workpiece contour, bending line, control panel, status data of the press beam (6), orientation information, reference angle, piece counter, and regions on the sheet metal to be formed that have an increased risk of injury during the bending process.

15. The bending machine according to one of claims 1 to 14, **characterized in that** the bending information comprises animated orientation information.

16. The bending machine according to one of claims 1 to 15, **characterized in that** the first and/or the second display surface is/are configured at discrete positions along the longitudinal extension (7).

17. The bending machine according to claim 16, **characterized in that** a beam deflection device is arranged in the beam path (17) of the projector (16).

18. The bending machine according to one of claims 13 to 17, **characterized in that** a position-locating device and/or a command issuance device (30) is/are connected with the machine controller (35).

19. The bending machine according to claim 18, **characterized in that** the connection is configured to be wireless, in particular by way of radio and/or by way of sound, in particular ultrasound.

20. The bending machine according to claim 18 or 19, **characterized in that** the position-locating device and/or a command issuance device (30) is/are formed by an article of clothing, in particular a shoe.

## Revendications

1. Machine de pliage (1) avec un dispositif d'affichage d'informations de pliage (2), dans laquelle la machine de pliage (1) comprend un bâti de machine (3) et une table de machine fixe à extension longitudinale (5) et une barre de pression à extension longitudinale (6), cette barre de pression (6) étant guidée dans le bâti de machine (3) et étant logé par un moyen d'entraînement (24) de manière mobile par rapport à celui-ci et dans laquelle l'extension longitudinale (7) et la direction de déplacement (8) de la barre de pression (6) définissent un plan de travail (9), et en outre, un plan d'insertion (12) est défini, globalement perpendiculairement au plan de travail (9), par un côté plat supérieur (10) de la table de machine (5) resp. d'un outil inférieur (11) et
dans laquelle le bâti de machine (3) comprend en outre deux parties latérales (4) qui sont distantes entre elles d'une largeur de machine dans la direction de l'extension longitudinale (7) de la table de machine (5) et de la barre de pression (6) et
dans laquelle le plan de travail (9) définit un espace de travail et de manipulation (14) et un espace de machine arrière (13) délimité et, plus particulièrement clôturé, par celui-ci,
**caractérisée en ce que**
• dans l'espace de machine arrière (13) et au-dessus du plan d'insertion (12), est disposé un projecteur (16) qui comprend un trajet de rayons (17) orienté loin du plan d'insertion (12), plus particulièrement un trajet de rayons (17) orienté vers le haut et
• dans l'espace de travail et de manipulation (14), est disposé un réflecteur (18) avec une première surface réfléchissante (19), cette première surface réfléchissante (19) étant disposée de manière pivotée d'un angle par rapport à l'horizontale, de façon à ce qu'un rayon lumineux provenant du trajet de rayons (17) du projecteur (16) quitte la première surface réfléchissante (19) sous la forme d'un rayon lumineux sortant d'un trajet de rayons (20) du réflecteur (18) en direction du plan d'insertion.

2. Machine de pliage selon la revendication 1, **caractérisée en ce que** le projecteur (16) et/ou le réflecteur (18) est disposé dans un dispositif de pivotement sur le bâti de machine (3), de façon à ce que le trajet de rayons (17) puisse être orienté, sur une portion, le long de l'extension longitudinale (7).

3. Machine de pliage selon la revendication 1, **caractérisée en ce que** le projecteur (16) et/ou le réflecteur (18) est disposé sur ou au niveau des parties latérales (4).

4. Machine de pliage selon l'une des revendications 1 à 3, **caractérisée en ce que** la table de machine (5) et/ou une tôle à former disposée dans le plan d'insertion (12) et/ou une surface de fond dans l'espace de travail et de manipulation avant (14) et/ou une surface d'un outil de pliage disposé dans la barre de pression (6), forment une première surface d'affichage.

5. Machine de pliage selon l'une des revendications 1 à 4, **caractérisée en ce que** le projecteur (16) et/ou le réflecteur (18) est disposé de manière mobile dans un guidage (28) disposé de manière parallèle à l'extension longitudinale (7).

6. Machine de pliage selon la revendication 5, **caractérisée en ce que** le projecteur (16) et/ou le réflecteur (18) est relié en mouvement par l'intermédiaire d'un moyen d'entraînement (29) avec le guidage (28).

7. Machine de pliage selon l'une des revendications 1 à 6, **caractérisée en ce que** le réflecteur (18) comprend une deuxième surface réfléchissante (21), dans laquelle les première et deuxième surfaces réfléchissantes (21) sont disposés dans le trajet de rayons (17) du projecteur (16) et **en ce que** des vecteurs normaux de surfaces des deux surfaces forment entre eux un angle.

8. Machine de pliage selon la revendication 7, **caractérisée en ce que** la barre de pression (6) forme une deuxième surface d'affichage.

9. Machine de pliage selon l'une des revendications 1 à 8, **caractérisée en ce que** le réflecteur (18) est disposé dans un dispositif de logement (22), ce dispositif de logement (22) étant mobile entre une position de protection et une position de travail.

10. Machine de pliage selon la revendication 9, **caractérisée en ce que** le dispositif de logement (22) est disposé, dans la position de protection, derrière le plan de travail (9), plus particulièrement au niveau de l'espace de machine arrière (13).

11. Machine de pliage selon la revendication 9 ou 10, **caractérisée en ce que** le dispositif de logement (22) est disposé, dans la position de protection, au-dessus du projecteur (16).

12. Machine de pliage selon l'une des revendications 1 à 11, **caractérisée en ce que** le projecteur (16) est constitué d'un laser avec une unité de déviation.

13. Machine de pliage selon l'une des revendications 1 à 12, **caractérisée en ce que** le projecteur (16) est relié avec une commande de machine (35) et/ou un système de commande de process et il existe une liaison technique de données concernant un système de préparation de travail resp. de CAO.

14. Machine de pliage selon l'une des revendications 1 à 13, **caractérisée en ce que** l'information de pliage est générée par au moins un élément du groupe constitué de : contour de pièce, ligne de pliage, panneau de commande, données d'état de la barre de pression (6), information d'orientation, angle de consigne, compteur de pièces et zones sur la tôle à former avec un risque de blessure élevé pendant le processus de pliage.

15. Machine de pliage selon l'une des revendications 1 à 14, **caractérisée en ce que** l'information de pliage comprend une information d'orientation animée.

16. Machine de pliage selon l'une des revendications 1 à 15, **caractérisée en ce que** la première et/ou deuxième surface d'affichage est réalisée à des positions discrètes le long de l'extension longitudinale (7).

17. Machine de pliage selon la revendication 16, **caractérisée en ce que**, dans le trajet de rayons (17) du projecteur (16), est disposé un dispositif de déviation de rayons.

18. Machine de pliage selon l'une des revendications 13 à 17, **caractérisée en ce que**, à la commande de machine (35), est relié un dispositif de localisation et/ou de génération d'instructions (30).

19. Machine de pliage selon la revendication 18, **caractérisée en ce que** la liaison est sans fil, plus particulièrement par radio et/ou par ondes acoustiques, plus particulièrement par ultrasons.

20. Machine de pliage selon la revendication 18 ou 19, **caractérisée en ce que** le dispositif de localisation et/ou de génération d'instructions (30) est constitué d'un vêtement, plus particulièrement d'une chaussure.
